Europäisches Patentamt

(19) European Patent Office

Office européen des brevets

(11) EP 0 974 416 A1

(12) ## DEMANDE DE BREVET EUROPEEN

(43) Date de publication:
26.01.2000 Bulletin 2000/04

(51) Int Cl.⁷: **B23K 9/29**

(21) Numéro de dépôt: **99401577.4**

(22) Date de dépôt: **24.06.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **20.07.1998 FR 9809205**

(71) Demandeur: **LA SOUDURE AUTOGENE FRANCAISE**
**F-75007 Paris (FR)**

(72) Inventeurs:
• **Briand Francis**
**75010 Paris (FR)**

• **Caillibotte, Georges**
**78780 Maurecourt (FR)**
• **Mas, Christophe**
**75012 Paris (FR)**

(74) Mandataire: **Le Moenner, Gabriel et al**
**L'Air Liquide S.A.,**
**DSPI,**
**Service Brevets et Marques,**
**75 Quai d'Orsay**
**75321 Paris Cedex 07 (FR)**

(54) **Buse de soudage a l'arc électrique de diametre et d'épaisseur particuliers**

(57) Une buse (1) pour torche de travail à l'arc électrique formée d'au moins un corps (2) de buse ayant sensiblement une forme de manchon, ledit corps (2) de buse comprenant, d'une part, une partie amont (5) comportant des moyens de fixation (7) destinés à permettre une fixation de la buse (1) à une torche de travail à l'arc électrique, et, d'autre part, une partie aval (4) dont l'extrémité (4a) est de section sensiblement circulaire de diamètre intérieur (D) et d'épaisseur (E). Le rapport (D/E) du diamètre intérieur (D) à l'épaisseur (E) de l'extrémité (4a) de la partie aval (4) du corps (2) de buse est tel que : 0.05 < E/D < 0.80. Une torche de travail à l'arc électrique munie d'une telle buse (1) et son utilisation dans une opération de soudage à l'arc, notamment en soudage MIG, TIG ou MAG.

FIG.2

**Description**

La présente invention concerne une buse de soudage dont l'épaisseur et le diamètre sont contrôlés et un procédé de soudage à l'arc électrique avec protection gazeuse utilisant un dispositif de soudage équipé d'une telle buse.

Les procédés de soudage à l'arc, notamment un procédé de type TIG (pour Tungsten Inert Gas), MIG (pour Metal Inert Gas) ou MAG (Metal Active Gas), sous flux gazeux de protection sont largement utilisés dans l'industrie.

En effet, mettre en place une protection gazeuse durant une opération de soudage permet d'éviter une contamination du cordon de soudure réalisé par des impuretés susceptibles d'être présentes dans l'air atmosphérique ambiant.

Ainsi, il est connu que, notamment l'azote et l'oxygène contenus dans l'air ambiant, sont nuisibles à la qualité des cordons de soudure, qui subissent, en présence de telles impuretés, une détérioration de leur aspect, de par des phénomènes d'oxydation et de nitruration, et de leur intégrité, c'est-à-dire de leurs caractéristiques de résistance et de performance mécaniques.

En d'autres termes, la mise en place d'une protection gazeuse durant l'opération de soudage à l'arc est donc destinée à éviter ou minimiser toute contamination du cordon de soudure par lesdites impuretés atmosphériques.

Habituellement, le gaz ou mélange gazeux de protection est délivré au moyen d'une torche de soudage ou un dispositif analogue équipé d'une buse unique ou de plusieurs buses sensiblement concentriques. Dans tous les cas, au moins une buse entoure l'électrode ou le fil fusible, de manière à ce qu'à la fois le fil fusible et une partie au moins du métal déposé, c'est-à-dire le cordon de soudure, soient protégés des contaminents atmosphériques, tels l'oxygène et l'azote.

De tels procédés de soudage et dispositifs munis de buses sont décrits dans les documents DE-A-1039675, JP-A-55122684, US-A-5081334, JP-A-6297149, JP-A-6046880, JP-A-62161481 et EP-A-0077705.

Afin de permettre de créer une protection efficace du fil ou de l'électrode, d'une part, et du joint de soudure, d'autre part, il est nécessaire que la buse ait un diamètre suffisant, en général supérieur ou égal à celui du cordon de soudure réalisé.

Or, il a été observé, de manière surprenante, en comparant des résultats obtenus avec plusieurs buses de même diamètre, que l'efficacité de la protection gazeuse pouvait varier considérablement d'une buse à une autre, bien que le diamètre des buses testées soit sensiblement identique, et qu'il en résulte alors des cordons de soudure ayant un aspect et des propriétés très variables et, dans certains, totalement inacceptables du point de vue industriel.

Un but de la présente invention est donc de résoudre le problème précité en proposant une buse améliorée et un procédé de soudage sous flux gazeux de protection permettant d'obtenir des cordons de soudure de qualité et d'aspect sensiblement constants et présentant des propriétés acceptables du point de vue industriel.

L'invention concerne alors une buse pour torche de travail à l'arc électrique formée d'au moins un corps de buse ayant sensiblement une forme de manchon, ledit corps de buse comprenant :

- une partie amont comportant des moyens de fixation destinés à permettre une fixation de la buse à une torche de travail à l'arc électrique, et

- une partie aval dont l'extrémité est de section sensiblement circulaire de diamètre intérieur (D) et d'épaisseur (E),

caractérisé en ce que le rapport (E/D) de l'épaisseur (E) au diamètre intérieur (D) de l'extrémité de la partie aval du corps de buse est tel que : $0.05 < E/D < 0.80$ ; l'épaisseur (E) et le diamètre intérieur (D) étant exprimés dans une même unité de mesure, par exemple en mm.

En effet, les inventeurs de la présente invention ont mis en évidence, de manière tout à fait surprenante, que le problème susmentionné pouvait être résolu ou minimisé grâce à l'utilisation d'une buse dont non seulement le diamètre mais aussi l'épaisseur de paroi sont soigneusement choisis.

Comme expliqué en détail dans les exemples ci-après, les variations de protection gazeuses pouvant être observées pour des buses différentes mais de même diamètre sont dues à une variation de l'épaisseur de la cloison ou paroi constituant ces buses.

En d'autres termes, l'épaisseur de la cloison de buse joue également, de manière totalement inattendue, un rôle important et non négligeable sur l'efficacité de la protection gazeuse mise en place durant le soudage.

Selon le cas, l'invention peut comprendre l'une ou plusieurs des caractéristiques suivantes:

- le rapport (E/D) est compris entre 0.08 et 0.50, de préférence 0.11 et 0.30.

- le diamètre (D) est compris entre 4 mm et 25 mm, de préférence entre 8 mm et 20 mm.

- l'épaisseur (E) est comprise entre 1 mm et 4 mm, de préférence entre 2 mm et 3 mm.

- le corps de buse a une forme cylindrique, tronconique ou cylindro-tronconique.

- le corps de buse a une longueur (L) comprise entre 10 mm et 100 mm.

- le corps de buse est réalisé en un matériau choisi parmi les céramiques, les métaux et alliages métalliques.

L'invention concerne, en outre, une torche de travail à l'arc électrique, notamment de soudage TIG, MIG ou MAG, comportant au moins une électrode ou au moins un fil fusible, des moyens de maintien de ladite électrode ou dudit fil fusible, et au moins une buse selon l'invention, formant manchon autour d'au moins une partie de l'électrode ou du fil fusible.

L'invention a trait également à un procédé de soudage à l'arc électrique sous flux gazeux de protection, notamment de type TIG, MIG ou MAG, dans lequel on réalise au moins un joint de soudure au moyen d'une torche selon l'invention.

Une torche de soudage à l'arc électrique, notamment de type TIG, MIG ou MAG, selon l'invention, peut être utilisée dans une opération d'assemblage par soudage, l'une avec l'autre, d'au moins deux pièces métalliques, lesdites pièces étant majoritairement constituées d'un métal ou un alliage métallique choisi parmi l'acier, l'inox, l'aluminium, le nickel et leurs alliages.

L'invention va maintenant être décrite plus en détail à l'aide de plusieurs modes de réalisation de buses de soudage conformes à l'invention, donnés à titre illustratif mais non limitatif.

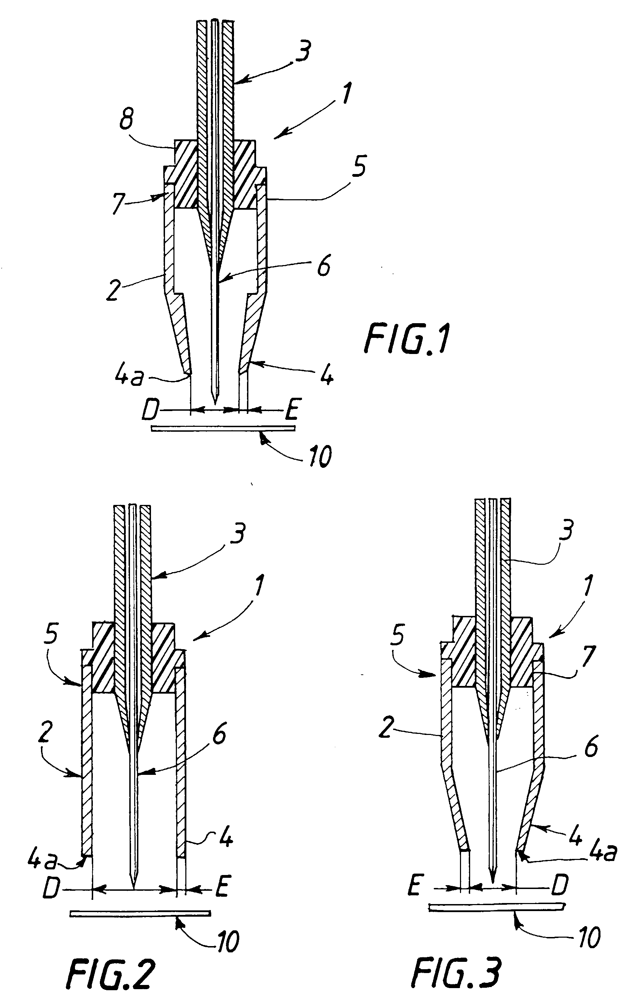

Ainsi, les figures 1 à 3 représentent des schémas, en coupe longitudinale, de buses 1 de soudage conformes à l'invention.

Plus précisément, on voit un tube plongeur 3 ou support d'électrode destiné à porter l'électrode 6 ou, le cas échéant, le fil fusible (variante non représentée), la buse 1 de distribution de gaz est munie d'un corps de buse 2 formant un manchon autour d'au moins une partie de l'électrode 6.

Le corps 2 de buse comprend une partie amont 5 comportant des moyens de fixation 7, tel un filetage ou un taraudage, destinés à permettre une fixation de la buse 1 à la torche de travail à l'arc électrique, et une partie aval 4 dont l'extrémité 4a est de section sensiblement circulaire de diamètre intérieur D et d'épaisseur interne E.

De manière connue, la buse 1 de distribution de gaz est alimentée en gaz de protection, tel de l'argon ou de l'hélium par exemples, par des moyens d'alimentation en gaz (non représentés), de façon à distribuer ledit gaz au moins dans et autour de la zone d'arc ; la zone d'arc étant située sensiblement entre l'électrode 6 et le cordon de soudure porté par la ou les pièces 10 à souder.

Le rôle du gaz de protection est d'assurer une protection du métal en fusion constituant le cordon de soudure et d'empêcher sa contamination par des impuretés atmosphériques, tels l'azote ou l'oxygène.

Comme montré dans l'exemple ci-après, afin d'assurer une protection gazeuse efficace durant une opération de soudage mettant en oeuvre une telle buse 1 distribuant le gaz de protection, il est indispensable de choisir avec soin, d'une part, le diamètre interne D de la partie d'extrémité 4 de la buse 1 et, d'autre part, l'épaisseur E de la partie d'extrémité 4 de la buse 1.

Préférentiellement, le diamètre D et l'épaisseur E de la partie 4 d'extrémité aval de la buse 1 sont choisis tels qu'ils vérifient la relation $0.05 < E/D < 0.80$ ; l'épaisseur (E) et le diamètre intérieur (D) étant exprimés, par exemple, en mm. De préférence, le rapport (E/D) est compris entre 0.08 et 0.50, de préférence 0.11 et 0.30.

Dans le cadre de la présente invention, le diamètre interne (D) de la buse 1 est déterminé au niveau de l'extrémité 4a de sortie de la buse et, plus précisément, dans le plan de sortie de la buse 1, ainsi que détaillé sur les figures 1 à 3.

En outre, sur les figures 5 à 7, on constate que le l'épaisseur (E) du corps 2 de buse prise en compte est celle située :

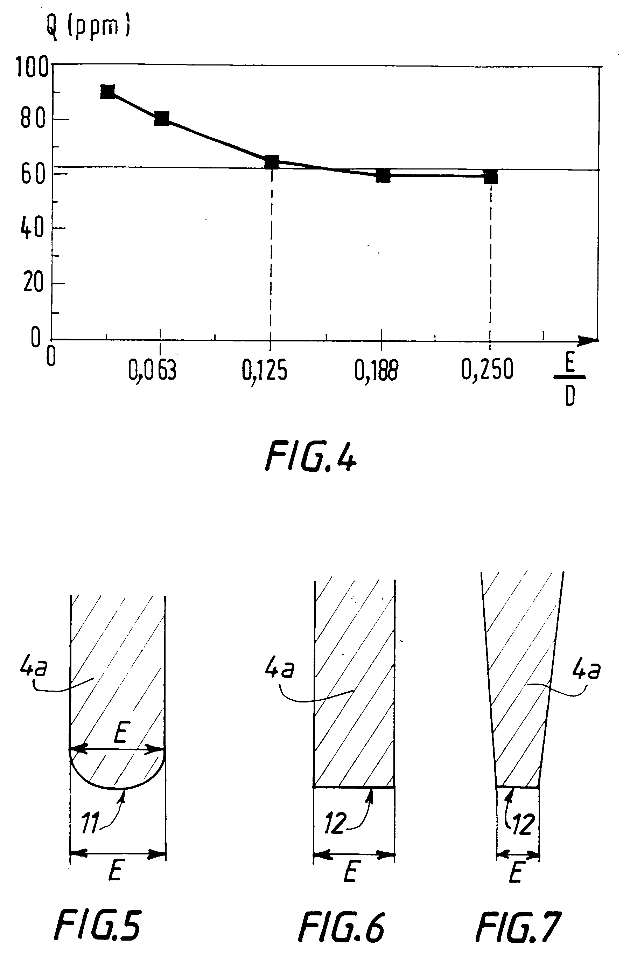

- juste en amont de l'arrondi 11, lorsque l'extrémité 4a de la partie aval 4 de la buse 1 se termine par un tel arrondi 11, ainsi que schématisé sur la figure 5 ; et
- au niveau du plan 12 de sortie de la buse 1 lorsque l'extrémité 4a de la partie aval 4 de la buse 1 se termine par une surface plane 12, ainsi que schématisé sur les figures 6 et 7.

**Exemple:**

Afin d'évaluer l'influence de l'épaisseur E de la partie d'extrémité aval 4 de la buse 1 sur l'efficacité de la protection gazeuse obtenue, on fait varier ladite épaisseur E (en mm) et on détermine alors la quantité d'azote (N2) incorporée dans le cordon de soudure.

Pour ce faire, on utilise des buses de soudage analogues à celle de la figure 2, lesquelles sont alimentées en un fil fusible de diamètre 1.2 mm faisant office d'électrode, tel un fil fusible de type NERTALIC 70S commercialisé par la Société LA SOUDURE AUTOGENE FRANCAISE.

Le diamètre interne D de la partie aval 4 d'extrémité 4a des buses testées est constant et égal à environ 16 mm, et l'épaisseur E de cette partie aval d'extrémité 4a varie entre 0.5 mm et 4 mm environ, selon la buse considérée, toutes choses étant égales par ailleurs.

En outre, le débit du gaz de protection utilisé est de 18 l.min$^{-1}$ environ, la vitesse d'avance du fil fusible de soudage est d'environ 8 m/min et la vitesse de soudage est d'environ 30 cm/min.

En tant que gaz de protection, on utilise ici le mélange d'argon et de dioxyde de carbone (8% de CO2) commercialisé par la Société L'AIR LIQUIDE sous la dénomination ARCAL 21™.

Les essais sont réalisés en soudage de type MIG (pour Metal Inert Gas) et la pièce sur laquelle est réalisé le cordon de soudage est un acier au carbone; la soudure étant réalisée en maintenant une distance extrémité de buse/pièce à souder d'approximativement 15 mm.

Le courant électrique mis en oeuvre pour obtenir la fusion du fil fusible a une intensité de 280 A.

Les résultats obtenus sont représentés sur la figure 4 où l'on voit que, plus le rapport (E/D) de l'épaisseur E au diamètre D de la partie d'extrémité 4 de la buse 1 augmente, plus la proportion ou quantité Q d'azote (en ppm pour parties par million) incorporée dans le cordon de soudure diminue.

Ainsi, pour obtenir une protection efficace et maximale du cordon de soudure, il est indispensable que le rapport E/D soit, dans ce cas, supérieur ou égal à environ 0.12, ce qui correspond approximativement à une épaisseur E de 2 mm pour un diamètre D de 16 mm au niveau de l'extrémité aval 4 de la buse 1.

Ces variations de l'efficacité de protection gazeuse peuvent s'expliquer, sans pour autant limiter la présente invention à cette théorie, par l'apparition de turbulences et de tourbillons gazeux au niveau de l'interface entre le gaz de protection et l'air ambiant. De telles turbulences tendent vers une incorporation d'air atmosphérique et donc de contaminants dans le cordon de soudure d'autant plus importante que le rapport E/D est faible.

## Revendications

1. Buse (1) pour torche de travail à l'arc électrique formée d'au moins un corps (2) de buse ayant sensiblement une forme de manchon, ledit corps (2) de buse comprenant :

   - une partie amont (5) comportant des moyens de fixation (7) destinés à permettre une fixation de la buse (1) à une torche de travail à l'arc électrique, et
   - une partie aval (4) dont l'extrémité (4a) est de section sensiblement circulaire de diamètre intérieur (D) et d'épaisseur (E),

   caractérisé en ce que le rapport (E/D) de l'épaisseur (E) au diamètre intérieur (D) de l'extrémité (4a) de la partie aval (4) du corps (2) de buse est tel que :

   $$0.05 < E/D < 0.80$$

2. Buse selon la revendication 1, caractérisée en ce que le rapport (E/D) est compris entre 0.08 et 0.50, de préférence 0.11 et 0.30.

3. Buse selon l'une des revendications 1 ou 2, caractérisée en ce que le diamètre (D) est compris entre 4 mm et 25 mm, de préférence entre 8 mm et 20 mm.

4. Buse selon l'une des revendications 1 à 3, caractérisée en ce que l'épaisseur (E) est comprise entre 1 mm et 4 mm, de préférence entre 2 mm et 3 mm.

5. Buse selon l'une des revendications 1 à 4, caractérisée en ce que le corps (2) de buse a une forme cylindrique, tronconique ou cylindro-tronconique.

6. Buse selon l'une des revendications 1 à 5, caractérisée en ce que le corps (2) de buse a une longueur (L) comprise entre 10 mm et 100 mm.

7. Torche de soudage TIG, MIG ou MAG à l'arc électrique comportant au moins une électrode (6) ou au moins un fil fusible, des moyens de maintien (8) de ladite électrode (6) ou dudit fil fusible, et au moins une buse (1) selon l'une des revendications 1 à 6, formant manchon (2) autour d'au moins une partie de l'électrode (6) ou du fil fusible.

8. Torche de travail à l'arc électrique, caractérisée en ce qu'elle est équipée d'au moins une buse (1) selon l'une des revendications 1 à 6.

9. Procédé de soudage à l'arc électrique, notamment de type TIG, MIG ou MAG, sous flux gazeux de protection, dans lequel on réalise au moins un joint de soudure au moyen d'une torche selon l'une des revendications 7 ou 8.

10. Utilisation d'une torche de soudage à l'arc électrique, notamment de type TIG, MIG ou MAG, selon la revendication 8, dans une opération d'assemblage par soudage, l'une avec l'autre, d'au moins deux pièces métalliques, lesdites pièces étant majoritairement constituées d'un métal ou un alliage métallique choisi parmi l'acier, l'inox, l'aluminium, le nickel et leurs alliages.

FIG.1

FIG.2

FIG.3

Q (ppm)

**FIG.4**

**FIG.5**            **FIG.6**            **FIG.7**

**Office européen des brevets**

**RAPPORT DE RECHERCHE EUROPEENNE**

Numéro de la demande

EP 99 40 1577

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | FR 2 025 200 A (BERNARD COMPANY) 4 septembre 1970 (1970-09-04) | 1-5,7-9 | B23K9/29 |
| Y | * page 6, alinéa 2 - alinéa 4; figures 4,5 * | 6 | |
| A | | 10 | |
| | --- | | |
| Y | CH 380 835 A (LA SOUDURE ELECTRIQUE AUTOGÈNE, PROCÉDÉS ARCOS, ANDERLECHT-BRUXELLES) * figures 1-4; tableau * | 6 | |
| | ----- | | |

DOMAINES TECHNIQUES RECHERCHES (Int.Cl.7)

B23K

Le présent rapport a été établi pour toutes les revendications

| Lieu de la recherche | Date d'achevement de la recherche | Examinateur |
|---|---|---|
| LA HAYE | 28 octobre 1999 | Herbreteau, D |

## ANNEXE AU RAPPORT DE RECHERCHE EUROPEENNE
## RELATIF A LA DEMANDE DE BREVET EUROPEEN NO.

EP 99 40 1577

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-10-1999

| Document brevet cité au rapport de recherche | Date de publication | Membre(s) de la famille de brevet(s) | Date de publication |
|---|---|---|---|
| FR 2025200 A | 04-09-1970 | CH 509127 A<br>DE 1960758 A<br>ES 374180 A<br>GB 1291500 A<br>JP 55016755 B<br>NL 6918063 A,B,<br>SE 367561 B<br>US 3514570 A | 30-06-1971<br>16-07-1970<br>01-04-1972<br>04-10-1972<br>06-05-1980<br>08-06-1970<br>04-06-1974<br>26-05-1970 |
| CH 380835 A | | AUCUN | |

EPO FORM P0460

Pour tout renseignement concernant cette annexe : voir Journal Officiel de l'Office européen des brevets, No.12/82